# EUROPÄISCHE PATENTSCHRIFT

(11) **EP 0 635 355 B1**
(45) Veröffentlichungstag und Bekanntmachung des Hinweises auf die Patenterteilung: **09.04.1997**
(21) Anmeldenummer: 94109241.3
(22) Anmeldetag: 16.06.1994
(51) Int. Cl.: B29C 69/00, B29C 51/30, B29C 33/02

(54) **Formwerkzeug zum Tiefziehen und Siegeln offener Kunststoffschalen**
Apparatus for deep drawing and joining of open plastic trays
Appareil pour l'emboutissage et le soudage de barquettes en matière plastique

(30) Priorität: 20.07.1993 DE 4324238
(43) Veröffentlichungstag der Anmeldung: 25.01.1995
(73) Patentinhaber: Tetra Laval Holdings & Finance SA, 1009 Pully (CH)
(72) Erfinder: Reil, Wilhelm, D-64625 Bensheim (DE); Bub, Heiko, D-55294 Bodenheim (DE)
(74) Vertreter: Weber, Dieter, Dr.

(56) Entgegenhaltungen:
- EP-A- 0 344 331
- DE-A- 1 454 922
- DE-A- 2 017 552
- US-A- 2 282 423

## Beschreibung

Die Erfindung betrifft ein Werkzeug zum Tiefziehen und Siegeln offener Schalen aus Kunststoff, mit einem den schalenförmigen Metallkörper an der offenen Seite in einer Ebene wenigstens teilweise umziehenden, im wesentlichen ebenen Rand, der einen von dem gekühlten Metallkörper getrennten, an letzterem befestigten, wärmeisolierenden Aufsatz aufweist.

Zur Herstellung von Flüssigkeitspackungen aus tiefziehfähigem Kunststoff ist es bekannt, plattenförmige Zuschnitte auf Heizplatten in ebenem Zustand zu erwärmen und in derjenigen Position, wo die ausreichend hohe Temperatur erreicht ist, ein schalenförmiges Tiefziehwerkzeug heranzuführen. An der offenen Seite dieser Schale befindet sich ein die Mulde des Werkzeuges im wesentlichen ganz umziehender Rand, und dieser hält den rahmenförmigen äußeren Rand der ebenen Kunststoffplatte durch Klemmung derart fest, daß der Bereich innerhalb des Rahmens unter Verformung tiefgezogen werden kann. Dadurch entsteht eine tiefgezogene, einseitig offene Schale aus Kunststoff, die außen von einer in einer Ebene liegenden Naht umgeben ist. Eine solche Kunststoffhalbschale kann mit einer umgekehrt dagegengesetzten Kunststoffschale dadurch verbunden werden, daß die beiden außen die Mulden der Kunststoffschalen umziehenden Nähte gegeneinandergedrückt und miteinander versiegelt werden. Ein solches Verfahren zur Herstellung von Packungen ist bekannt.

Die zum Ansiegeln der Außennaht der ersten Kunststoffschale an die der zweiten Kunststoffschale erforderliche Temperatur hat der Kunststoff zwar beim Tiefziehen gehabt, ein Tiefziehwerkzeug wird aber bekanntlich gekühlt, damit der tiefgezogene Kunststoffkörper abkühlen und sich verfestigen kann. Zum Verbinden zweier tiefgezogener Kunststoffschalen miteinander war es daher erforderlich, wenigstens im Bereich der Außennaht den Kunststoff nochmals zu erwärmen, um die erforderliche hohe Siegeltemperatur zu erreichen. Dieser zusätzliche Erwärmungsprozeß kostet nicht nur Energie sondern auch Zeit und reduziert daher die Leistung von Packungsmaschinen.

Aus dem Dokument US-A-2,282,423 ist ein Werkzeug zum Tiefziehen von Bechern aus Kunststoff bekannt, bei welchem ein ebener Rand den schalenförmigen Metallkörper des Werkzeuges an seiner offenen Seite in einer Ebene umzieht. Dieser Rand weist einen in den Metallkörper eingesetzten, wärmeisolierenden Aufsatz auf. Dieser Aufsatz ist ringförmig und besteht aus nichtmetallischem Material mit relativ niedriger Wärmeleitfähigkeit, zum Beispiel ein Hartfasermaterial. Das bekannte Werkzeug dient dazu, aus einer im wesentlichen ebenen Platte aus Kunststoff, die horizontal gehalten, zum Beispiel am Rand außen eingeklemmt wird, einen Becher oder eine Schale zu formen, daß ein Stempel in den Hohlraum eines unteren Werkzeuges einfährt und dabei die Bahn oder das bogenförmige Material aus Kunststoff in das hohle Werkzeug hinunterbewegt. Das Kunststoffmaterial muß über den den schalenförmigen Metallkörper umziehenden Rand von außen nach innen hinübergezogen werden. Gleichzeitig muß eine zu starke Abkühlung des erhitzten Kunststoffmaterials vermieden werden. Der bekannte, ringförmige, wärmeisolierende Aufsatz ist entsprechend ausgestaltet, angeordnet und wärmeisolierend. Außerdem kann das Kunststoffmaterial gut über diesen Hartfaserring gleiten.

Wollte man das bekannte Werkzeug auch zum Siegeln der geformten, offenen Schalen verwenden, dann müßte der wärmeisolierende Aufsatz aus dem nichtmetallischen Material durch andere Bauteile ersetzt werden, denn beim Siegeln müssen nicht unerhebliche Drücke aufgebracht werden, um Randteile fest aneinander anzubringen.

Sehr ähnlich liegen die Verhältnisse bei der EP-A-0 344 331. Auch dort umzieht den oberen Rand eines schalenförmigen Metallkörpers zum Tiefziehen von Kunststoffbehältern ein wärmeisolierender Ringteil, welcher den gekühlten, schalenförmigen Metallkörper außen umgibt. Auch dieser wärmeisolierende Ringkörper hat die Aufgabe, von außen in den Hohlraum des Metallkörpers hereinbewegtes Kunststoffmaterial nicht zu stark abzukühlen, damit für den Tiefziehprozess der weiche Zustand des geschmolzenen Kunststoffes nicht verloren geht. Gleichzeitig hat das wärmeisolierende Ringteil im bekannten Fall gute Schlupfeigenschaften, um ein leichtes Gleiten der Kunststoffbahn oder des Bogens von außen über den Rand des schalenförmigen Metallkörpers nach innen in diesen hinein zu ermöglichen.

Ein Siegeln der tiefgezogenen offenen Schalen ist auch bei dieser Vorrichtung nicht beabsichtigt, jedenfalls nicht im Bereich dieses wärmeisolierenden Ringteils.

Aus der DE-A-14 54 922 ist es zwar weiterhin bekannt, zwei Hälften eines Kunststoffkörpers zu formen und gleichzeitig mit der Durchführung dieses Formungsvorganges die Ränder der beiden Hälften miteinander zu verschmelzen, um zum Beispiel die Rumpfteile von Schaufensterpuppen herzustellen und aus zwei offenen Schalenteilen zu bilden. Das hierfür verwendete Werkzeug benötigt aber einen Ofen, in welchen die gebildeten beiden Formhälften erwärmt und erzeugt werden. Zwei Formhälften werden dabei auf Flachmaterialstücke bewegt und müssen in eine bestimmte Stellung derart gebracht werden, daß die Ränder der Hohlräume der Formhälften an den Flachmaterialstücken angreifen, um dann eine Druckkraft aufzubringen. Das Bewegen der Werkstücke und auch der Werkzeugteile stellt einen Aufwand dar, der unerwünscht ist. Außerdem bevorzugt der Fachmann Strahlungswärme gegenüber einem Ofen, der voluminös und aufwendig gebaut sein muß.

Zur Vermeidung der vorstehenden Nachteile liegt der Erfindung die Aufgabe zugrunde, das Werkzeug der eingangs genannten Art so zu verbessern, daß die Außennaht einer durch den Metallkörper des Werkzeuges tiefgezogenen Kunststoffschale mit der Außennaht einer umgekehrt dagegengesetzten Kunststoffschale von ein und demselben Werkzeug ohne zusätzliche Wärmezufuhr durch Siegeln verbunden werden kann.

Diese Aufgabe wird erfindungsgemäß dadurch gelöst, daß der Aufsatz für das Siegeln außen an der offenen Seite des Werkzeuges befestigt ist und aus einer ersten aus Stahl hergestellten rahmenförmigen Platte und einer zwischen dieser und dem Metallkörper angebrachten, aus wärmeisolierendem Material hergestellten zweiten rahmenförmigen Platte besteht. Wenn nach der Lehre der Erfindung außen an der offenen Seite des Werkzeuges ein wärmeisolierender Aufsatz am Rand befestigt ist, kann die auf dem Rand des Werkzeuges aufliegende Außennaht aus Kunststoff nicht vergleichsweise schnell - wenn überhaupt - dadurch gekühlt werden, daß die Wärme aus der Außennaht des Kunststoffproduktes in den Metallkörper fließt. Dieser Wärmefluß ist durch die wärmeisolierende zweite Platte erheblich reduziert, wenn nicht unterbunden.

Die Außennaht der tiefgezogenen Kunststoffschale behält also im Verlaufe des Tiefziehvorganges ihre hohe Temperatur. Das gleiche geschieht mit einer anderen Kunststoffschale, die zum Verbinden der beiden umgekehrt gegen die erste Schale gegengesetzt wird. Beide Außennähte haben dann eine für ein effektives Versiegeln geeignete Temperatur und können gegeneinandergedrückt werden. Ohne zusätzliche Wärmezufuhr können dadurch die beiden Außennähte der Schalen durch Siegeln miteinander verbunden werden.

Man kann die Stahlplatte auch als Steg oder Leiste bezeichnen, der bzw. die durch Nieten, Schrauben oder Kleben an der offenen Seite mit dem schalenförmigen Metallkörper des Werkzeuges verbunden wird. Der Steg oder die Leiste kann auch aus mehreren Segmenten zusammengesetzt sein; so auch die ganze rahmenförmige Platte. Erst durch Anbringen des erfindungsgemäßen Aufsatzes ist das Werkzeug endgültig fertiggestellt und eignet sich nicht nur zum Tiefziehen sondern auch zum Siegeln offener Schalen aus Kunststoff, die mit anderen Worten von ein und demselben Werkzeug hergestellt und durch Versiegeln miteinander vereinigt werden.

Im Handel gibt es geeignete wärmeisolierende Materialien, aus denen man schmale, gewinkelte und gegebenenfalls in der gewünschten Weise konturierte Platten herstellen kann, so daß diese genau zu den offenen Stegseiten der Metallkörper passen und auf diese aufgesetzt werden können. Die entsprechend geformte Außennaht der einen Schale kann dann mit der der anderen Schale durch Einklemmen zwischen die beiden rahmenförmigen Platten versiegelt werden.

Für die Erfindung kann man zuerst die wärmeisolierende zweite Platte auf den Metallkörper aufsetzen und dann außen die erste Platte aus Stahl, vorzugsweise aus nichtrostendem Stahl. Durch letzteren erhält man eine sehr harte Oberfläche, die besonders dann günstig ist, wenn man zusätzlich eine besondere Kontur außen anfräsen will. Außerdem ist der vorzugsweise nichtrostende Stahl selbst ein schlechter Wärmeleiter. Legt man unter diesen als zweite Platte aus wärmeisolierendem Material einen Duroplast, dann hat man sehr gute Temperaturisolierungen. Die in der heißen Außennaht des tiefgezogenen Produktes befindliche Wärme kann also praktisch nicht in den gekühlten Metallkörper abfließen.

Als wärmeisolierendes Material für die genannte zweite rahmenförmige Platte können sogenannte Bakelite-Kunststoffe verwendet werden, unter denen Duroplaste zusammengefaßt sind, z.B. Phenoplaste, Aminoplaste, Epoxit-, Furan- und Polyesterharze. Diese Bakelite-Kunststoffe sind im Handel erhältlich und technisch gut zu verarbeiten. Beispielsweise kann ein solcher Bakelite-Kunststoff als Dünnfilmkleber ausgestaltet werden, der hochtemperaturempfindlich ist, d.h. seine Klebeeigenschaften variieren erst ab 200°C aufwärts. Mit einer solchen Art Dünnfilmkleber können die nichtrostenden Stahlplatten wie mit einem Doppelklebeband festgeklebt werden. Auf diese Weise ist man mit Vorteil von Nieten oder Schrauben unabhängig.

Für das wärmeisolierende Material der rahmenförmigen Platte kann man auch eine Teflon-Bronze verwenden, wobei dieses Material vorzugsweise eine einheitliche Wärmeleitfähigkeit hat. Ein derartiges Material besteht aus einer Beimischung von Bronze zu Teflon und ist im Handel erhältlich. Es ist bekannt, Teflon-Bronzen bei Lagern, Gleitscheiben und dergleichen zu verwenden. Man kann rahmenförmige Platten aus Teflon-Bronze in allen Konturen bearbeiten. Wenn man die rahmenförmige Platte ohne Schrauben, Nieten oder Kleben am gekühlten Metallkörper befestigen will, gelingt dies mit Vorteil z.B. auch durch Formschluß, indem man die rahmenförmige Platte aus Teflon-Bronze auf der Innenseite mit einer Schwalbenschwanzform versieht und den Schwalbenschwanz in eine entsprechende Nut zwängt.

Eine besonders geeignete Ausführungsform des erfindungsgemäßen Werkzeuges ist dadurch gekennzeichnet, daß der Aufsatz auf wenigstens einem Teil der Lange der rahmenförmigen Platte mindestens eine nach außen hochstehende Erhebung hat. Es kann zur wirtschaftlichen Herstellung einer Kunststoffpackung zweckmäßig sein, wenigstens eine Kunststoffhalbschale paarweise so tiefzuziehen, daß die Öffnung der einen Schale direkt an der Öffnung der anderen zu liegen kommt. Diese "Mund-zu-Mund"-Anordnung erleichtert das Tiefziehen deshalb besonders überraschend, weil die Außennaht der Packung das Paar der Kunststoffschalen in geschlossener Weise umgibt und dennoch eine Packung mit großer Öffnung tiefgezogen werden kann. Die Paare von Halbschalen bzw. (nach dem Vereinigen mit der gegenüberliegenden Schale) die Paare von Packungen müssen dann voneinander getrennt werden. Zum Trennen kann es zweckmäßig sein, im Kunststoff beim Tiefziehen eine Nut einzuformen, was zweckmäßig dadurch erfolgt, daß am Werkzeug eine hochstehende Rippe vorgesehen ist. Aus diesem Grunde ist es günstig, wenn der Aufsatz in der vorstehend beschriebenen Weise eine nach außen hochstehende Erhebung hat, entweder in Form einer durchgehenden Rippe oder einer Kette von erhabenen Punkten oder dergleichen.

Es kann besonders zweckmäßig sein, die Erfindung weiter dadurch auszugestalten, daß wenigstens eine der rahmenförmigen Platten aus Segmenten zusammengesetzt ist. Es wurde oben schon angedeutet, daß die rahmenförmige Platte aus wärmeisolierendem Material oder auch die andere rahmenförmige Platte aus z.B. nichtrostendem Stahl nicht aus einem Stück sondern aus vielen Stücken zusammengesetzt geformt sein kann. Diese Stücke bezeichnet man als Segmente, aus denen die eine oder die andere oder beide Platten rahmenförmig zusammensetzbar sind. Dies kann sich besonders günstig dann auswirken, wenn der schalenförmige Metallkörper eine wesentlich andere Wärmeleitfähigkeit und damit auch Wärmeausdehnung hat als das Material der rahmenförmigen Platte bzw. der Segmente, welche diese bilden. Abgesehen davon, daß die Formung einer rahmenförmigen Platte im Sinne der vorstehenden Beschreibung wirtschaftlich günstiger und technisch einfacher durch das Aneinanderreihen von Segmenten durchgeführt werden kann, kann man die Wärmeausdehnung der unterschiedlichen, aneinander befestigten Materialien durch die Segmente besser ausgleichen. Unerwünschte mechanische Spannungen können durch kleine Spalte zwischen den einzelnen Segmenten mit Vorteil vermieden werden. Wie bei Bimetallen könnte sich die rahmenförmige Platte auf dem Metallkörper durch unterschiedliche Wärmeausdehnung derart biegen, daß die Platte leicht bogenförmig wird, weil die Bimetallspannungen auftreten. Die kleinen Spalte zwischen den einzelnen Segmenten können die verschiedenen Wärmeausdehnungen hervorragend ausgleichen.

Zweckmäßig ist es ferner, wenn bei einer bevorzugten Ausführungsform die zweite rahmenförmige Platte aus wärmeisolierendem Material höchstens halb so dick ist wie die erste rahmenförmige Platte, die beispielsweise aus Stahl besteht.

Die bevorzugt auf Dicke der Platte aus Stahl wird 1,2 mm festgelegt, während die Platte aus dem wärmeisolierenden Material, die eine Teflon-Folie sein könnte, eine Dicke von etwa 0,5 mm hat.

Durch die vorstehenden Ausführungsbeispiele erkennt der Fachmann, daß der Aufsatz am Rand des gekühlten Metallkörpers möglichst dünn sein soll, damit für ein Siegeln und gegebenenfalls auch Formen des Kunststoffproduktes eine ausreichende Härte an der Oberfläche vorgesehen ist, andererseits eine Sperre für den Wärmefluß aus der heißen Außennaht zu dem gekühlten Metallkörper; und zusätzlich ein möglichst weitgehend gekühlter Metallkörper, um mit der Ausnahme der Außennaht möglichst den gesamten tiefgezogenen Körper des Kunststoffproduktes kühlen und aushärten zu können.

Grundsätzlich erkennt der Fachmann, daß die Dicke der sogenannten ersten rahmenförmigen Platte bezüglich der der sogenannten zweiten rahmenförmigen Platte je nach dem Material variiert werden kann. Will man beispielsweise die Siegeltemperatur wesentlich erhöhen, dann ist es zweckmäßig, die rahmenförmige Platte aus dem wärmeisolierenden Material dicker auszugestalten, also entgegen der vorstehend erwähnten bevorzugten Ausführungsform. Wenn man hingegen feststellt, daß die Siegeltemperatur durch die entsprechende Ausgestaltung des Werkzeuges sehr leicht erreicht wird, dann kann man die wärmeisolierende Schicht dünner gestalten, beispielsweise halb so dick wie die außen aufgelegte erste Platte aus Stahl. Die wärmeisolierende Platte dient ja dazu, die Wärme zu stauen und für den Siegelvorgang zur Verfügung zu halten. Gleichwohl wird vom Fachmann immer angestrebt, die Temperatur so niedrig wie möglich zu halten, weil dadurch das tiefgezogene Material besser und schneller gekühlt werden kann. Zwischen der Dicke der wärmeisolierenden Platte und der Dicke der aufgelegten Metallplatte wird daher häufig empirisch das Optimum gesucht und eingestellt. Je dünner die an der offenen Seite vorn aufgelegte Metallplatte ist, desto stärker reagiert die wärmeisolierende Schicht darunter, und die Wärmekapazität für den Wärmestau wird geringer.

Die vorstehenden Maßnahmen gemäß der Erfindung mit der "isolierten Siegelfläche" dienen alle mit Vorteil der Ausnutzung der Restwärme vom Tiefziehen des Kunststofformlinges, und zwar der in seiner Außennaht befindlichen Wärmemenge, zugunsten des Siegelvorganges. Damit können zwei Kunststoffschalen mit ein und demselben Werkzeug sowohl tiefgezogen und ausgeformt als auch danach über ihre Außennähte durch Siegeln miteinander verbunden werden.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen:
- Figur 1: schematisch im Schnitt eine Tiefziehmaschine mit den mittleren und äußeren Wärmeplatten und den darunter angeordneten Tiefziehwerkzeugen,
- Figur 2: eine ähnliche und vergrößerte Ansicht des linken Teils der Maschine mit einem Werkzeug zum Tiefziehen und Siegeln,
- Figur 3: die Draufsicht auf drei Paare von Tiefziehwerkzeugen von der offenen Seite her, wobei das untere Paar abgebrochen ist,
- Figur 4: eine vergrößerte Schnittansicht entsprechend der Einzelheit in dem gestrichelten Kreis IV in Figur 3,
- Figur 5: eine abgebrochene Querschnittsansicht entlang der Linie V-V der Figur 3,
- Figur 6: ähnlich der Figur 5 eine Querschnittsansicht, abgebrochen, jedoch von einer anderen Ausführungsform von Aufsatz,
- Figur 7: eine weitere andere Ausführungsform eines Aufsatzes mit seiner Befestigung und
- Figur 8: abgebrochen die Draufsicht auf ein gerades Stück einer rahmenförmigen Platte aus nichtrostendem Stahl.

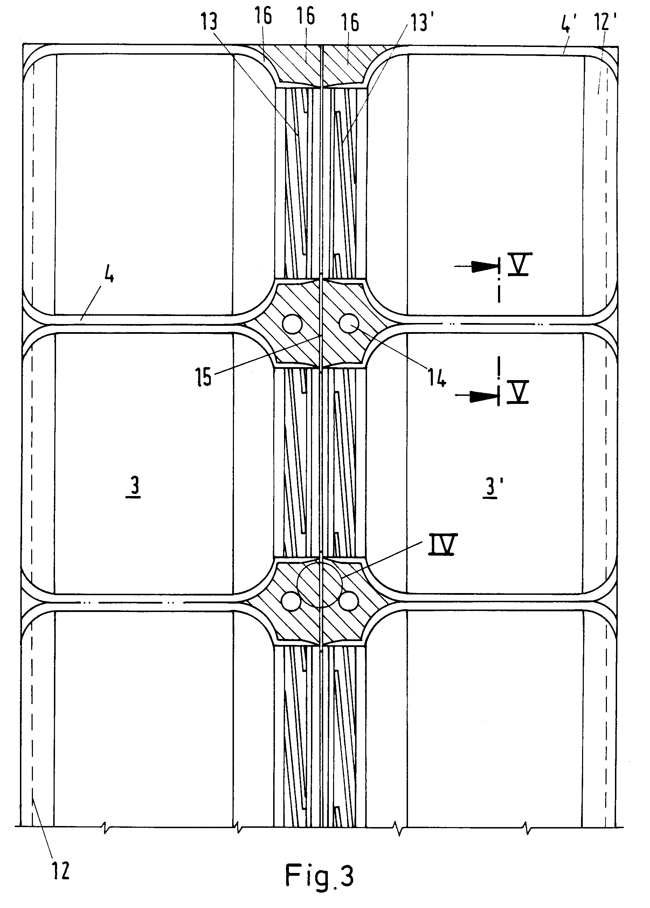

Mit der Maschine zum Erwärmen, Tiefziehen und Siegeln einseitig offener Halbschalen aus Kunststoff werden nach dem Versiegeln der beiden Schalen miteinander Fließmittelpackungen erstellt, die tubusförmige Seitenwände, einen Boden und eine Oberwand haben, wobei in der Oberwand eine Ausgießöffnung angeordnet ist. In einer Ebene parallel zur Längsmittelachse der fertigen Packung liegt eine Naht, auch Schweißnaht genannt, welche die Verpackung umzieht, nämlich die Außennaht, welche jeder schalenförmigen Hälfte zugeordnet ist und diese umzieht. Bei der fertigen Packung durchzieht diese Außennaht den Boden längs einer Vertiefung, so daß insgesamt gesehen der Boden im wesentlichen flach ist, ohne daß die Außennaht stört. Im Oberboden wird die Naht durch die erwähnte Ausgießöffnung unterbrochen, die außen einen hochstehenden Bund aufweist. Mit dem in Figur 3 dargestellten Werkzeug wird eine Fließmittelpackung erstellt, in deren Bund ein Außengewinde vorgesehen ist. Diese Außennaht ragt bis an den freien oberen Rand des Bundes und läuft im letzten Stück verjüngt auf diesen zu. Bei der Verpackung, die hier nicht zeichnerisch dargestellt wird, bilden die zwei flanschartigen Außennähte des Paares von Formhälften die erwähnte Naht an der Verpackung. Bei der Betrachtung der Figur 3 kann man sich leicht vorstellen, daß gleichzeitig mindestens drei Paare von Halbschalen geformt werden, wobei jede Einheit von zwei Kopf an Kopf über die Bünde miteinander verbundenen Packungen nach außen im wesentlichen geschlossen ist. Die Kunststoffprodukte, welche mit dem Werkzeug nach Figur 3 hergestellt werden können, werden miteinander versiegelt, so daß die drei Paare geschlossener Packungen entstehen, welche danach in der Mitte, wo die beiden Bünde aneinanderstoßen, getrennt und damit geöffnet werden.

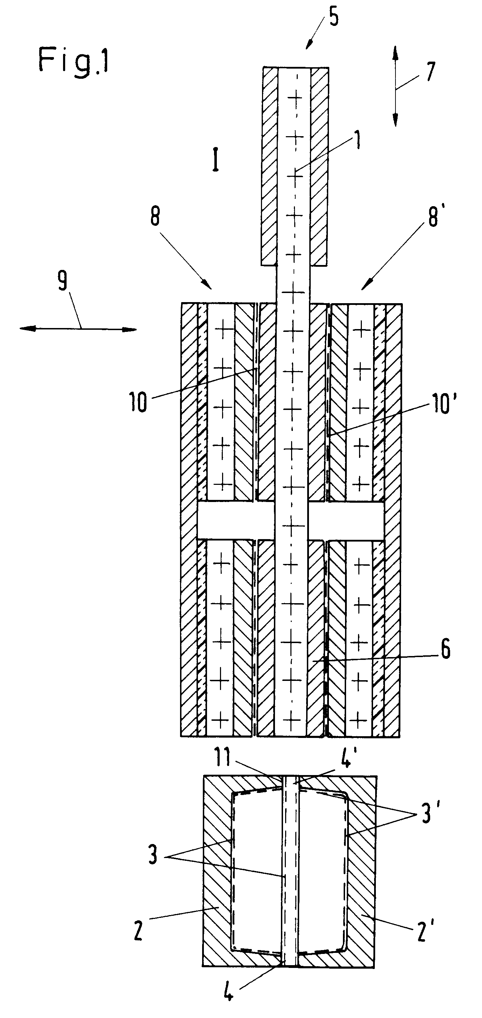

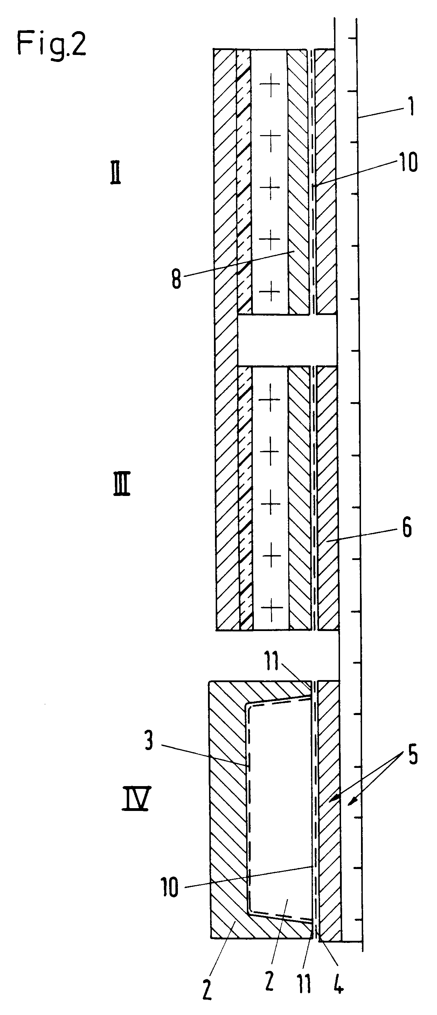

In Figur 1 ist schematisch die Erwärmungs- und Tiefziehmaschine gezeigt, mit welcher z.B. eine einzige, an der Ausgießöffnung offene oder anderweitig gestaltete Hallsschale geformt werden kann. Symmetrisch zur Symmetrieebene 1 sind unten in Figur 1 ein links angeordneter, schalenförmiger Metallkörper 2 und rechts ein entsprechender Metallkörper 2' als Tiefziehwerkzeuge dargestellt, in denen jeweils gestrichelt eine schon tiefgezogene offene Halbschale 3 bzw. 3' aus Kunststoff mit ihrer flanschartigen Außennaht 4, 4' gebildet sind. Die Form der Ausgießöffnung wird zunächst offen gelassen, denn die Figuren 1 und 2 zeigen die Maschine und ihre Funktion zunächst nur grundsätzlich und schematisch.

In der Mitte über den Tiefziehwerkzeugen bzw. Metallkörpern 2, 2' befindet sich im Abstand die mittlere Hauptwärmeplatte 5, die im Abstand übereinander drei Paare von Hauptsaugplatten 6 trägt und in Richtung des Doppelpfeiles 7 vertikal relativ zu den schalenförmigen Metallkörpern 2, 2' der Tiefziehwerkzeuge bewegbar ist. Bei einer anderen Ausführungsform kann die Hauptwärmeplatte 5 auch horizontal von vorn nach hinten und umgekehrt bewegt werden.

In der oberen Stellung der Hauptwärmeplatte, wie in Figur 1 bei der hier gezeigten und beschriebenen Ausführungsform gezeigt ist, befinden sich in ihrem unteren Bereich neben den zwei Paaren von Hauptsaugplatten 6 horizontal rechts und links sogenannte horizontal bewegliche Wärmesaugplatten 8 bzw. 8', die in Richtung des Pfeiles 9 in einer Richtung senkrecht zur Symmetrieebene 1 so hin- und herbewegbar sind, daß die jeweils zu erwärmende Kunststoffplatte 10 bzw. 10', die in Figur 1 gestrichelt gezeigt sind, an die jeweils gegenüberliegende Hauptsaugplatte angedrückt werden kann. Auch die beiden schalenförmigen Metallkörper 2 und 2' können in Richtung des Doppelpfeiles 9 senkrecht zur Symmetrieebene 1 soweit bewegt werden, daß die Hauptwärmeplatte nach unten zwischen die Metallkörper 2, 2' bewegt und dort angehalten werden kann, wobei dann die oberen und unteren Ränder der Metallkörper 2, 2' mit denen der Hauptsaugplatten 6 zusammenfallen.

Im Betrieb arbeitet diese Maschine so, daß aus tiefziehfähigem Kunststoff passender Außenabmessungen gefertigte Kunststoffplatten 10, 10' in der in Figur 1 obersten Position I gegen die oberen Hauptsaugplatten 6 gedrückt und von diesen durch Saugkraft gehalten werden.

Die Kunststoffplatten 10, 10' werden in der Position I erwärmt und im erwärmten Zustand, nachdem die schalenförmigen Metallkörper 2, 2' nach außen auseinandergefahren sind, in die in Figur 2 gezeigte Position II nach unten gefahren.

In Figur 2 ist zur Vereinfachung nur die linke Hälfte der Maschine neben der Symmetrieebene 1 dargestellt, weil die Vorgänge auf der rechten Seite die gleichen sind. Jede der horizontal beweglichen Wärmesaugplatten 8 übernimmt jeweils in der Position II und später in der Position III die aufgewärmte Kunststoffplatte 10 dadurch, daß die Saugrichtung entsprechend so eingestellt wird, daß die Kunststoffplatte 10 von der Hauptsaugplatte 6 abgestoßen und von der horizontal beweglichen Wärmesaugplatte 8 angezogen werden. Auch die horizontal beweglichen Wärmesaugplatten 8 sorgen für eine weitere Erwärmung der Kunststoffplatte 10. Wenn die Hauptwärmeplatte 5 wieder vertikal nach oben fährt, ist sie in der obersten Position I leer, um eine neue kalte Kunststoffplatte aufzunehmen; und in den unteren Positionen II bzw. III ebenfalls leer, um von der jeweils gegenüberliegenden horizontal beweglichen Wärmesaugplatte 8 eine zwischenerwärmte Kunststoffplatte 10 übergeben zu bekommen.

Dieses Übergeben erfolgt immer derart, daß die horizontal bewegliche Wärmesaugplatte 8 aus der Position der Figuren 1 und 2 horizontal nach links in Richtung des Pfeiles 9 wegbewegt wird, während sie die zu erwärmenden Kunststoffplatten 10 trägt; und nach der vertikalen Bewegung der Hauptwärmeplatte 5 wieder horizontal zur Symmetrieebene 1 hin zurückbewegt wird.

Damit wird beispielsweise in der Position III die zwischenerwärmte Kunststoffplatte 10 an die Hauptsaugplatte 6 übergeben und weiter erwärmt, wobei zu beachten ist, daß in diesem Betriebszustand die unterste der drei Hauptsaugplatten 6 in der Position III steht.

Danach entfernt sich wieder die horizontal bewegliche Wärmesaugplatte 8 nach links, und die auf ihre höchste vorgesehene Temperatur erwärmte Kunststoffplatte 10 wird vertikal nach unten in die Position IV bewegt.

In der Position IV fährt der Metallkörper 2 horizontal in Richtung des Pfeiles 9 auf die Symmetrieebene 1 zu und klemmt die Kunststoffplatte 10 zwischen dem ebenen Rand 11 des Metallkörpers 2 und der untersten Hauptsaugplatte 6 fest ein. Nun erfolgt das Tiefziehen mit dem Ergebnis, daß aus der ursprünglich ebenen Kunststoffplatte 10 jetzt die offene Schale 3 aus Kunststoff gebildet ist. Die flanschartige Außennaht 12, die spätere Siegelnaht, wird dabei durch Klemmung gehalten und liegt nach wie vor in der Ebene der früheren Kunststoffplatte 10.

Nach dem Tiefziehen wird der (durch nicht gezeigte Mittel) gekühlte Metallkörper 2 geöffnet bzw. horizontal nach links in Richtung des Pfeiles 9 von der untersten Hauptsaugplatte 6 weggefahren, damit die Hauptwärmeplatte 5 in Richtung des Pfeiles 7 vertikal nach oben angehoben werden kann.

Ist der Raum zwischen den zwei gekühlten Metallkörpern 2, 2' frei, dann fahren diese vertikal in Richtung auf die Symmetrieebene 1 so aufeinander zu, daß die in Figur 1 unten gezeigte Position erreicht wird. Die noch warmen flanschartigen Außennähte 4, 4' werden gegeneinandergedrückt, und dadurch werden die beiden offenen Schalen 3 aus Kunststoff zu der oben beschriebenen Gesamteinheit, der Packung versiegelt. Es wird also die Außennaht 4 der offenen Halbschale 3 mit der umgekehrt dagegengesetzten Außennaht 4' der Halbschale 3' durch Siegeln verbunden. Dies erfolgt durch ein und dasselbe Werkzeug, nämlich durch den schalenförmigen Metallkörper 2 bzw. 2', ohne daß von außen zusätzlich Wärme zugeführt werden müßte.

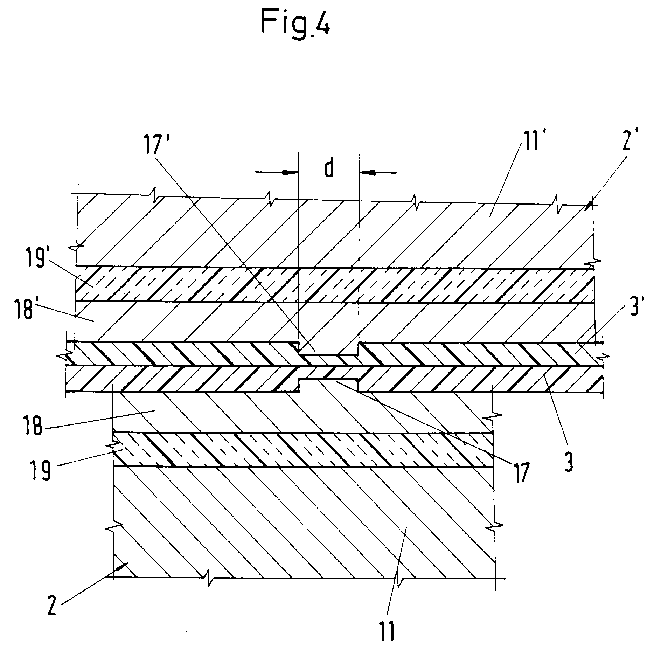

Die Ausbildung des Randes 11 an der offenen Seite des jeweiligen Metallkörpers 2 ist in den Figuren 1 bis 3 noch nicht dargestellt, sondern wird nachfolgend im Zusammenhang mit der Beschreibung der Figuren 4 bis 8 erläutert.

Der prinzipielle Aufbau und Betrieb der Maschine und der Werkzeuge zum Tiefziehen und Siegeln der Schalen 3 aus Kunststoff sind nun aber durch die Figuren 1 und 2 und ihre Beschreibung verständlich geworden.

Figur 3 stellt eine Draufsicht in die offenen Schalen 3, 3' aus Kunststoff, die bis auf die Bodenpartie 12 identisch wie die schalenförmigen Metallkörper 2, 2' aussehen. An der Bodenpartie 12, 12' hingegen erkennt man, daß die flanschartige Außennaht 4, 4' als gestrichelte Linie erscheint. Bei der Ausführungsform des Werkzeuges nach Figur 3 sieht man die Bünde 13, 13', die öffnungsseitig miteinander verbunden sind.

Im Bereich der Auswerfstifte 14 befinden sich beidseitig der Rippe 15 die Randteile 16, die später weggestanzt werden.

Figur 4 zeigt eine abgebrochene Querschnittsansicht, wenn man die Einzelheit entsprechend dem gestrichelten Kreis IV (in Figur 3 unten) betrachtet. In der Mitte erkennt man das von rechts nach links verlaufende Kunststoffmaterial der offenen Schale 3 und darüber der offenen Schale 3', wobei in der Mitte die gewollte Einschnürung zu sehen ist. Diese entsteht durch die jeweils nach außen hochstehende Erhebung 17, 17' in dem Aufsatz 18, 18' des Werkzeuges.

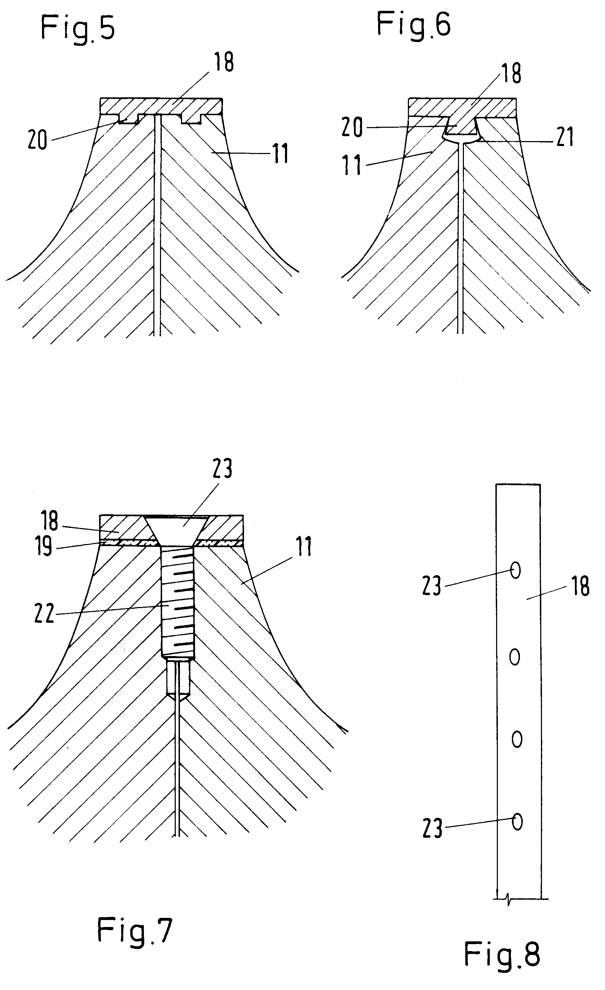

Bei der Ausführungsform der Figuren 4 und 7 ist am Rand 11, 11' des vorzugsweise als Aluminium bestehenden Metallkörpers 2, 2' ein Aufsatz 18, 19 (bzw. 18', 19') befestigt, der aus zwei Teilen besteht, welche der Form der Außennaht 4, 4' entsprechen und daher für sich jeweils wie eine rahmenförmige Platte aussehen. Die Form beider rahmenförmiger Platten 18 und 19 (bzw. 18', 19') ist ersichtlich gleich. Die erste rahmenförmige Platte 18 besteht aus nichtrostendem Stahl. Zwischen dieser und dem Rand 11 des Metallkörpers 2 ist die zweite rahmenförmige Platte 19 angebracht, die aus einem wärmeisolierenden Material hergestellt ist, z.B. Teflon oder Bakelite, wie oben schon beschrieben. Diese zweite wärmeisolierende Platte 19 sorgt dafür, daß die in dem Kunststoffmaterial der Schale 3 (in ihrem Randbereich) befindliche Restwärme nur die dünne zweite Platte 18 erwärmt, nicht aber in den gekühlten Metallkörper 2 abfließt.

In Figur 4 ist die zweite rahmenförmige Platte 19 aus dem wärmeisolierenden Material fast gleich dick dargestellt wie die erste rahmenförmige Platte 18 aus nichtrostendem Stahl. Dieses Verhältnis kann für den Fall der Ausführungsform des Aufsatzes nach den Figuren 4 und 7, wo der Aufsatz aus den zwei Teilen besteht, variiert werden. Zum Beispiel kann die Wärmeisolierplatte 19 eine Dicke von nur 0,5 mm haben, während die erste Platte 18 aus nichtrostendem Stahl eine Dicke von 1,2 mm hat. In diesem Falle wünscht man aus wärmetechnischen Gründen die Erwärmung des etwas größervolumigen Stahlkörpers 18. In anderen Fällen, bei denen die wärmeisolierenden Eigenschaften der zweiten Isolationsplatte 19 eine größere Rolle spielen sollen, legt man die Dickenverhältnisse etwa wie in der Zeichnung der Figur 4 fest, so daß also beide Teile 18, 19 des Aufsatzes 18 etwa gleich dick sind.

In Figur 5 ist der Rand 11 zweier nebeneinander angeordneter schalenförmiger Metallkörper 2 im Schnitt dargestellt, wie der Ansicht V-V in Figur 3 entspricht. Dieser Aufsatz 18 kann ebenso wie der der anderen Ausführungsform nach Figur 6 mit nach unten zum Rand 11 hin ragenden Verankerungsrippen 20 versehen sein. Bei der Ausführungsform der Figur 5 besteht das wärmeisolierende Material aus dem oben erläuterten Viton-Gummi und ist auf den Rand 11 aufgeklebt, beispielsweise mit einem Epoxykleber. Dieses Material erlaubt ein Überschleifen nach seinem Aufkleben.

Bei der anderen Ausführungsform der Figur 6 besteht das wärmeisolierende Material aus einer Teflon-Bronze mit einem Schwalbenschwanzprofil, wobei der Schwalbenschwanz gemäß Darstellung der Figur 6 nach unten in eine Ausnehmung im Rand 11 des Werkzeuges ragt. Bei der Montage kann es genügen, unter Deformieren dieser Schwalbenschwanzverbindung, die Verankerungsrippe 20 in die gezeigte Ausnehmung 21 einzudrücken - ohne Verklebung.

Für die Ausführungsformen der Figuren 5 - 6 gelten, daß eine obere Stahlplatte montiert werden muß.

Bei der Ausführungsform der Figur 7 ist die Materialpaarung in Verbindung mit Figur 4 beschrieben. Figur 7 zeigt die Befestigung der beiden rahmenförmigen Platten 18 und 19 am Rand 11 der Metallkörper 2. Es handelt sich um eine Senkschraube 22, die so tief eingeschraubt wird, daß die Oberfläche ihres Kopfes 23 mit der Oberfläche des Stahlteils 18 bündig ist.

Figur 8 zeigt in Draufsicht ein abgebrochenes, geradliniges Teil der ersten Platte 18 mit den Schraubköpfen 23. Anhand dieser Darstellung ist gut vorstellbar, daß der gesamte Rahmen des einzigen Aufsatzes 18 aus einzelnen Segmenten zusammengesetzt ist, die hintereinander insgesamt die Rahmenform ergeben, zwischen denen aber zwecks Ausgleichs unterschiedlicher Längenausdehnungen bei der Erwärmung Spalte vorhanden sind. Dadurch kann mit Vorteil vermieden werden, daß sich der Aufsatz 18 zwischen zwei Befestigungspunkten aufbeult, weil sich die erste Platte aus Stahl oder dergleichen stärker ausdehnt als der Metallkörper 2, auf dem sie befestigt ist. Durch die segmentartige Ausgestaltung der rahmenförmigen Platte ist mit Vorteil stets eine ebene Auflage gewährleistet.

### Bezugszeichenliste

- 1: Symmetrieebene
- 2, 2': Metallkörper
- 3, 3': Halbschale
- 4, 4': Außennaht
- 5: Hauptwärmeplatte
- 6: Hauptsaugplatten
- 7: Doppelpfeil
- 8, 8': Wärmesaugplatten
- 9: Pfeil
- 10, 10': Kunststoffplatte
- 11, 11': Rand
- 12: Außennaht
- 12, 12': Bodenpartie
- 13, 13': Bünde
- 14: Auswerfstifte
- 15: Rippe
- 16: Randteile
- IV: gestrichelter Kreis
- 17, 17': Erhebung
- 18: Stahlkörper
- 18, 18': rahmenförmige Platte, Aufsatz
- 19: Isolationsplatte
- 19, 19': rahmenförmige Platte, Aufsatz
- 20: Verankerungsrippen
- 21: Ausnehmung
- 22: Senkschraube
- 23: Schraubköpfe
- I: oberste Position
- II: untere Position
- III: untere Position
- IV: Position

## Patentansprüche

1. Werkzeug zum Tiefziehen und Siegeln offener Schalen (3) aus Kunststoff, mit einem den schalenförmigen Metallkörper (2, 2') an der offenen Seite in einer Ebene wenigstens teilweise umziehenden, im wesentlichen ebenen Rand (11, 11'), der einen von dem gekühlten Metallkörper (2, 2') getrennten, an letzterem befestigten, wärmeisolierenden Aufsatz (18) aufweist, dadurch gekennzeichnet, daß der Aufsatz (18, 18') für das Siegeln außen an der offenen Seite des Werkzeuges befestigt ist und aus einer ersten aus Stahl hergestellten rahmenförmigen Platte (18, 18') und einer zwischen dieser und dem Metallkörper (2) angebrachten, aus wärmeisolierendem Material hergestellten zweiten rahmenförmigen Platte (19) besteht.

2. Werkzeug nach Anspruch 1, dadurch gekennzeichnet, daß der Aufsatz (18) auf wenigstens einem Teil der Länge der rahmenförmigen Platte mindestens eine nach außen hochstehende Erhebung (17, 17') hat.

3. Werkzeug nach einem der Ansprüche 1 oder 2, dadurch gekennzeichnet, daß wenigstens eine (18, 18') der rahmenförmigen Platten (18, 18', 19, 19') aus Segmenten zusammengesetzt ist.

4. Werkzeug nach einem der Ansprüche 1 bis 3, dadurch gekennzeichnet, daß die zweite rahmenförmige Platte (19, 19') aus wärmeisolierendem Material höchstens halb so dick ist wie die erste Platte (18, 18').

## Claims

1. Tool for deep-drawing and sealing open shells (3) made from plastics, with a substantially planar edge (11, 11') at least partially surrounding the shell-shaped metal body (2, 2') on the open side on one plane, which edge is provided with a heat insulating attachment (18) separate from the cooled metal body (2, 2') and, attached thereto, characterised in that for sealing, the attachment (18, 18') is fitted externally onto the open side of the tool, and is composed of a first frame-shaped plate (18, 18') made from steel and a second frame-shaped plate (19) mounted between this and the metal body (2), made from heat insulating material.

2. Tool according to claim 1, characterised in that the attachment (18) has at least one projection (17, 17') projecting outwards on at least a part of the length of the frame-shaped plate.

3. Tool according to one of claims 1 or 2, characterised in that at least one (18, 18') of the frame-shaped plates (18, 18', 19, 19') is composed of segments.

4. Tool according to one of claims 1 to 3, characterised in that the second frame-shaped plate (19, 19') of heat insulating material is at the most half the thickness of the first plate (18, 18').

## Revendications

1. Outillage pour emboutir et thermosceller des coques plastiques ouvertes (3), comportant un bord (11, 11'), essentiellement plan, qui entoure au moins partiellement, dans un plan et sur son côté ouvert, le corps métallique (2, 2') en forme de coque, bord qui possède un chapeau calorifuge (18), séparé du corps métallique refroidi (2, 2') et fixé à ce dernier, caractérisé en ce que le chapeau (18, 18') est, pour le thermoscellage, fixé extérieurement à la face ouverte de l'outillage, et est constitué d'une première plaque (18, 18') en forme de cadre, fabriquée en acier, et d'une deuxième plaque (19), en forme de cadre, rapportée entre la première plaque et le corps métallique (2), et fabriquée en un matériau calorifuge.

2. Outillage selon la revendication 1, caractérisé en ce que le chapeau (18) possède, sur au moins une partie de la longueur de la plaque en forme de cadre, au moins une élévation (17, 17') s'élevant vers l'extérieur.

3. Outillage selon l'une des revendications 1 ou 2, caractérisé en ce qu'au moins l'une (18, 18') des plaques en forme de cadre (18, 18', 19, 19') est constituée de segments.

4. Outillage selon l'une des revendications 1 à 3, caractérisé en ce que la deuxième plaque (19, 19') en forme de cadre, en un matériau calorifuge, a une épaisseur au moins égale à la moitié de celle de la première plaque (18, 18').
